Europäisches Patentamt

European Patent Office

Office européen des brevets

(19)

(11) Veröffentlichungsnummer: **0 072 500**
**B1**

(12) ## EUROPÄISCHE PATENTSCHRIFT

(45) Veröffentlichungstag der Patentschrift:
14.01.87

(21) Anmeldenummer: **82107069.5**

(22) Anmeldetag: **05.08.82**

(51) Int. Cl.⁴: **B 60 C 9/02,** B 60 C 9/16,
B 60 C 9/20, B 60 C 3/00

(54) **Luftreifen für schwere Belastung.**

(30) Priorität: **17.08.81 DE 3132310**

(43) Veröffentlichungstag der Anmeldung:
**23.02.83 Patentblatt 83/8**

(45) Bekanntmachung des Hinweises auf die Patenterteilung:
**14.01.87 Patentblatt 87/3**

(84) Benannte Vertragsstaaten:
**AT BE DE FR GB IT LU NL SE**

(56) Entgegenhaltungen:
**DE-A-2 644 452**
**FR-A-1 407 685**
**FR-A-2 386 425**
**US-A-3 961 657**

(73) Patentinhaber: **BAYER AG, Konzernverwaltung RP**
**Patentabteilung, D-5090 Leverkusen 1 Bayerwerk**
**(DE)**

(72) Erfinder: **Ippen, Jakob, Dr., Schleiermacherstrasse**
**17, D-5090 Leverkusen 1 (DE)**
Erfinder: **Stüttgen, Friedel, Albrecht- Dürer-**
**Strasse 94, D-5024 Pulheim (DE)**

EP 0 072 500 B1

## Beschreibung

Die Erfindung betrifft einen Luftreifen für schwere Belastung,bestehend aus luftdichter Innenplatte, Karkasse, Gürtel, Lauffläche, Seitenwand und Reifenfuß, wobei der Gürtel beiderseits über die Laufflächenbreite um 5 - 20 % vorkragt.

Es hat sich gezeigt, daß LKW-Radialreifen heutiger Bauart nicht für einen Schwerlastbetrieb unter rauhen Einsatzbedingungen geeignet sind, die beispielsweise bei zu hoher Oberlast (bis 200 %) oder zu geringem Luftdruck auftreten können. Denn Radialreifen üblicher Bauart sind in erster Linie auf höhere Geschwindigkeiten und lange Autobahnfahrten ausgelegt. Bei rauhem Betrieb versagen diese Reifen schon nach einigen tausend Fahrkilometern.

Bekannt ist der gattungsgemäße Luftreifen aus der FR-A- 1 407 685, bei dem der Stahlkordgürtel die Laufflächenbreite um 10-20 % beiderseits überkragt.

Der Nachteil dieses Reifens besteht darin, daß oberhalb der kritischen Verankerung des Gürtels sich eine große Gummimasse befindet, die wegen der nicht vermeidbaren Bewegung der Stahlkordränder einen Hitzestau erzeugt, der zur Zerstörung des Reifens führen kann. Der Versuch, durch seitliche Rillen die Wärmeabfuhr zu erleichtern, erhöht andererseits die Verletzungsgefahr durch scharfkantige Steine, wie sie beispielsweise bei Erdbewegungsfahrzeugen oft als Hindernisse auf dem Wege liegen.

Aufgabe der Erfindung ist es, einen Luftreifen für Schwerlastbetrieb zu finden, der auch bei ungünstiger Beanspruchung,wie starker Überlastung bis zu 200 % der Nennlast, Verletzungsgefahr durch steinigen Untergrund und Wartungsfehler durch zu geringen Luftdruck,noch eine ausreichende Lebensdauer besitzt.

Die Aufgabe wird erfindungsgemäß dadurch gelöst, daß die Karkasse in der Wirkungslinie einer der Kräfte, die bei einer Belastung von 30 bis 50 % des zulässigen Gesamtgewichts vorhanden ist, konstruktiv angeordnet ist, und daß die Bereiche beiderseits der Laufflächenbreite durch konkave Kreisbögen mit Radien, die 10 - 25 % der Laufflächenbreite betragen verjüngt sind.

Durch die Abweichung der Karkassenlinie von der Ideallinie, die bei unbelasteten Luftreifen vorliegt, wird das Maximum der Spannungen abgebaut, wodurch eine Überbelastung sich nicht mehr so schädlich auswirkt, so daß die Lebensdauer des Reifens verlängert wird. Gleichzeitig erlaubt die neue Reifenform eine günstige Verjüngung im übergangsbereich von Lauffläche zur Seitenwand, wodurch die Gefahr des Hitzestaus reduziert und der Kraftfluß verbessert wird. Weiter ist die Oberleitung der Kräfte aus dem Gürtel durch die seitliche Verlängerung der Gürteleinlagen beiderseits der Lauffläche begünstigt. Diese spezielle kreisbogenförmige Ausrundung ist leicht formenmäßig herzustellen und hat sich als günstig bei der Deformation bzw. Verletzungen durch Hindernisse erwiesen.

Ein Beispiel der Erfindung ist in der Zeichnung dargestellt und wird im folgenden näher beschrieben. Es zeigen
Fig. 1 Schnitt durch Reifen
Fig. 2 Karkassenlagen.

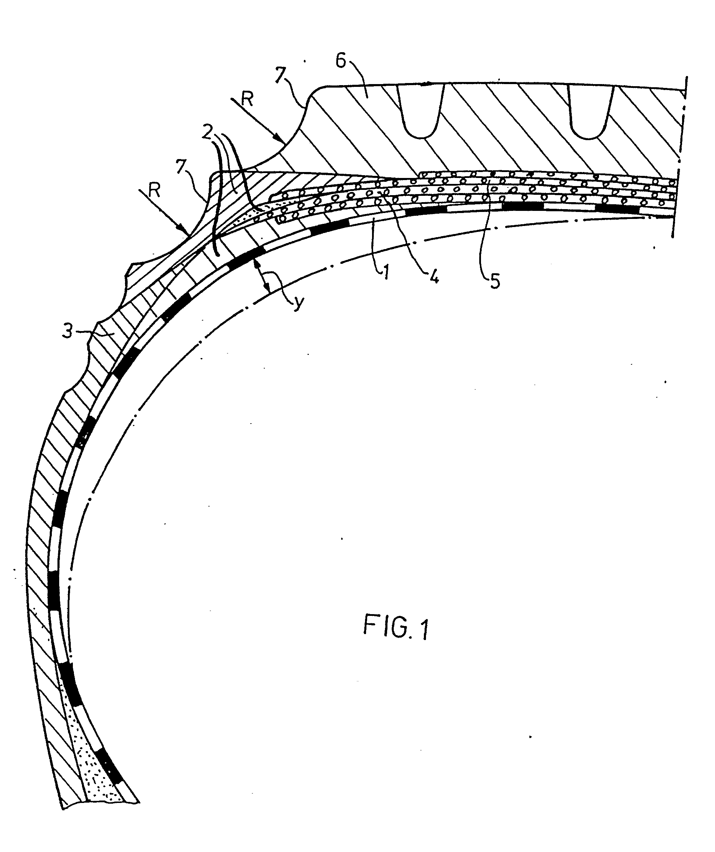

In Fig. 1 besteht der Reifen aus einer Stahlkordkarkasse 1, einer hochelastischen Gummimischung 2, einem Seitenteil 3, zwei unteren Stahlgürteln 4, einem oberen Stahlgürtel 5 und einer Lauffläche 6, die mittels zwei konkav geformten Ausrundungen 7 mit dem Radius R vom Rande der Laufflächenbreite allmählich in das Seitenteil 3 übergeht. Zur Verdeutlichung des Verlaufes der Karkassenlinie ist noch die übliche Karkassenlinie auch bei unbelasteten, gleich hohen Reifen eingezeichnet, die hier im Bereich der Ausrundung der Karkasse um den Abstand y = 10 - 25 mm versetzt ist. An die Karkasse 1 schließt nach innen die zur Vermeidung der Unübersichtlichkeit nicht dargestellte Innenplatte an.

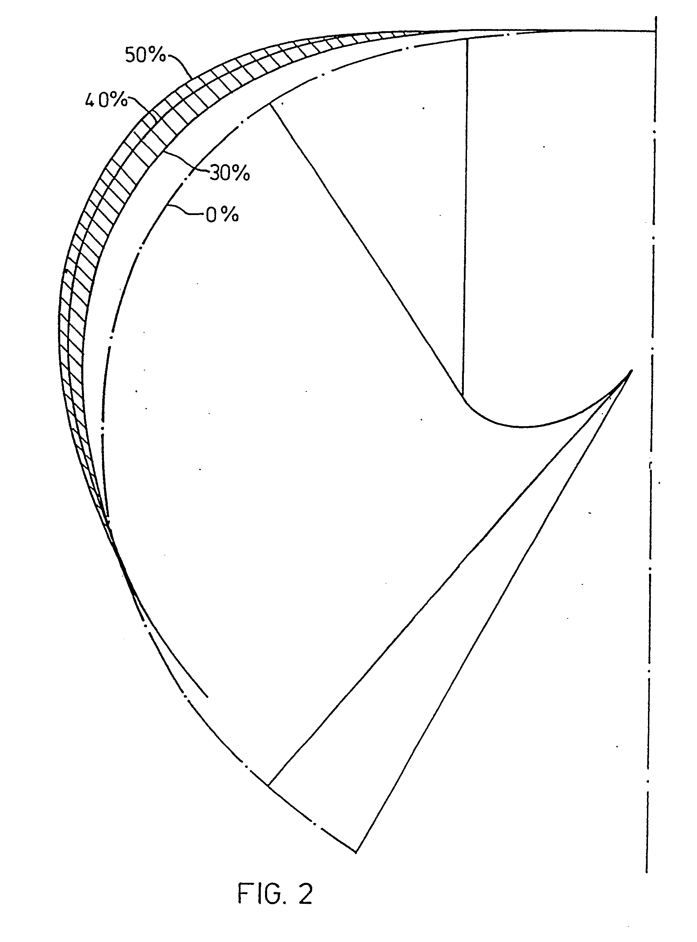

In Fig. 2 sind im Schnitt die Wirkungslinien der Kräfte bei einer Belastung von 0, 30, 40 und 50 % der zulässigen Lasten dargestellt. Der erfindungsgemäß geforderte Verlauf der Karkasse soll bei der Herstellung des Reifens im schraffierten Bereich,der von den Wirkungslinien 30 % und 50 % begrenzt ist, liegen.

## Patentanspruch

Luftreifen für schwere Belastung, bestehend aus luftdichter Innenplatte, Karkasse (1), Gürtel (4, 5), Lauffläche (6), Seitenwand (3) und Reifenfuß, wobei der Gürtel beiderseits über die Laufflächenbreite um 5 - 20 % vorkragt, dadurch gekennzeichnet, daß die Karkasse (1) in der Wirkungslinie einer der Kräfte, die bei einer Belastung von 30 - 50 % des zulässigen Gesamtgewichts vorhanden ist, konstruktiv angeordnet ist, und daß die Bereiche beiderseits der Laufflächenbreite durch konkave Kreisbögen mit Radien (R), die 10 - 25 % der Laufflächenbreite betragen, verjüngt sind.

## Claim

Pneumatic tyre for heavy loads, consisting of an airtight inner panel a carcass (1) a belt (4, 5), a tread (6), a side-wall (3) and a tyre base the belt projecting beyond both sides of the tread width by 5 - 20 %, characterised in that the carcass (1) is constructionally arranged in the line of action of one of the forces present in the event of a loading of 30 - 50 % of the permitted laden weight, and in that the regions on both sides of the tread width are tapered by concave arcs having radii (R) amounting to 10 - 25 % of the tread width.

**Revendication**

Pneumatique pour grandes charges, composé d'une doublure interne étanche à l'air, d'une carcasse (1), d'une ceinture (4, 5), d'une bande (6) de roulement, d'un flanc (3) et d'un talon, la ceinture dépassant la largeur de la bande de roulement des deux côtés de 5 à 20 %, caractérisé par le fait que la carcasse (7) est disposée, par sa conception, dans la ligne d'action d'une des forces présentes lors d'une charge de 30 à 50 % de la charge totale admise, et par le fait que les zones des deux côtés de la largeur de la bande de roulement sont amincies en forme d'arcs de cercle concaves ayant des rayons (R) égaux à 10 à 25 % de la largeur de la bande de roulement.

FIG. 1

50%

40%

30%

0%

FIG. 2